# EUROPÄISCHE PATENTSCHRIFT

(11) **EP 0 612 581 B1**
(45) Veröffentlichungstag und Bekanntmachung des Hinweises auf die Patenterteilung: **14.05.1997**
(21) Anmeldenummer: 94102338.4
(22) Anmeldetag: 16.02.1994
(51) Int. Cl.: B23K 37/02, B23K 37/053

(54) **Schweisskopf**
Welding head
Tête de soudage

(30) Priorität: 22.02.1993 DE 9302541 U
(43) Veröffentlichungstag der Anmeldung: 31.08.1994
(73) Patentinhaber: Tesch, Klaus, D-22301 Hamburg (DE)
(72) Erfinder: Tesch, Klaus, D-22301 Hamburg (DE)
(74) Vertreter: Glawe, Delfs, Moll & Partner

(56) Entgegenhaltungen:
- DE-A- 3 531 572
- FR-A- 701 786
- GB-A- 2 249 984
- US-A- 4 810 848

## Beschreibung

Die Erfindung betrifft einen Schweißkopf zum Anbringen von Schweißnähten am Umfang im wesentlichen zylindrischer Werkstücke, mit wenigstens zwei um die Werkstücke schließbaren Werkzeugsegmenten, die Spanneinrichtungen zum Spannen und Positionieren der Werkstücke aufweisen, und mit einem relativ zum Schweißkopf drehbaren und dabei die Werkstücke umlaufenden Schweißwerkzeug.

Bei einem aus US-A-4,810,848 bekannten Schweißkopf der eingangs genannten Art umschließen zwei um das Werkstück schließbare Werkzeughälften einen umlaufenden Zahnkranz, der U-förmig ausgeschnitten ist und die Schweißelektrode trägt. Im geöffneten Zustand des Schweißkopfs liegt dieser Zahnkranz so in einer Werkzeughälfte, daß das Werkstück durch die Öffnung des U's in diesen Zahnring eingeführt werden kann. Die Außenverzahnung des Rings wirkt mit zwei Antriebsritzeln zusammen, von denen jeweils mindestens eins mit der Zahnung des Rings in Eingriff ist. Durch die während des Schweißvorgangs auftretende hohe thermische Belastung kann sich der Zahnring verziehen. Wenn ein Ritzel im Bereich der Öffnung des Zahnrings liegt und bei dessen Fortschreiten wieder mit der Zahnung des Zahnrings in Eingriff kommt, können aufgrund des Verzugs zwei Zähne aufeinander treffen und es kann Bruch entstehen. Es ist nicht möglich, diese Bruchgefahr durch ein größeres Spiel der Zähne zu umgehen, da dies an einer Stelle der Umlaufbewegung zu einem kurzzeitigen Stillstand des Zahnrings und als Folge davon zu Schweißfehlern führen würde. Nachteilig bei diesem Schweißkopf ist ferner, daß das zur Schweißstelle geführte Schutzgas (Inertgas) durch die Öffnung des Zahnrings über den Ritzelbereich und das Motorgehäuse abfließen kann, so daß ständig verhältnismäßig große Schutzgasmengen zugeführt werden müssen.

Der Erfindung liegt die Aufgabe zugrunde, einen Schweißkopf der eingangs genannten Art zu schaffen, der die genannten Nachteile nicht oder in geringerem Maße aufweist und der einfach zu handhaben ist.

Die Erfindung löst diese Aufgabe dadurch, daß das Schweißwerkzeug an einem die Werkstücke umschließenden Drehring angeordnet ist, der aus wenigstens zwei Ringsegmenten zusammengesetzt ist. Im geschlossenen Zustand des Schweißkopfs umschließt der Drehring das Werkstück vollständig und bleibt daher ständig mit seinen Antriebseinrichtungen in Eingriff. Beim Öffnen des Schweißkopfs bleibt jedes Ringsegment in einem Werkzeugsegment, so daß Werkstücke problemlos entnommen und eingesetzt werden können. Da der Drehring beim Schweißvorgang den Schweißbereich vollständig umschließt, ist seine Führung und sein Antrieb über den gesamten Umfang hinweg gegenüber diesem Schweißbereich geschützt.

Es ist besonders zweckmäßig, wenn der von jedem Ringsegment eingenommene Umfangswinkel dem von einem Werkzeugsegment eingenommenen Umfangswinkel entspricht. Dieser Umfangswinkel wird in der Rotationsebene des Drehrings gemessen. Vor dem Öffnen des Schweißkopfs wird der Drehring in eine Winkelstellung gebracht, in der seine Teilungsfugen sich mit den Teilungsfugen des Schweißkopfs decken. In der Regel weist der Schweißkopf zwei um die Werkstücke schließbare Werkzeughälften auf, so daß der Drehring aus zwei Ringhälften zusammengesetzt ist.

Der Drehring ist vorteilhafterweise als Zahnring mit einem am Außenumfang angeordneten Zahnkranz ausgebildet. In diesen Zahnkranz kann ein Antriebsritzel eingreifen. Ein einziges Antriebsritzel ist ausreichend, da der Drehring bzw. Zahnring im geschlossenen Zustand des Werkzeugs keine Unterbrechung aufweist. Anstelle des Antriebs des Drehrings durch ein gezahntes Ritzel kann auch ein anders gearteter Antrieb verwendet werden, beispielsweise ein Reibradantrieb.

Vorteilhafterweise liegt der Drehring stirnseitig an einem werkzeugfesten (d.h. relativ zum Schweißkopf ortsfesten) geteilten Führungsring an, dessen Teilung der Teilung der um die Werkstücke schließbaren Werkzeugsegmente entspricht. Die Teilungsfugen des Führungsrings decken sich also mit den Teilungsfugen des Schweißkopfs. Der Drehring kann gegen radiales Verschieben gegenüber diesem Führungsring gesichert sein, bspw. durch in den aneinander anliegenden Stirnflächen angeordnete, umlaufende und zusammenwirkende Nuten und Stege. Über diesen Führungsring, kann, wie weiter unten noch näher erläutert, Strom und Schutzgas der Schweißstelle zugeführt werden.

Zweckmäßigerweise liegt an der vom Führungsring abgewandten Stirnfläche des Drehrings ein axial federnder geteilter Andruckring an, der ebenfalls entsprechend der Teilung der Werkzeugsegmente geteilt ist. Dieser Andruckring sichert den Drehring in axialer Richtung und drückt ihn gegen den Führungsring.

Zweckmäßigerweise weist wenigstens ein Segment des Führungsrings Kühleinrichtungen auf, bspw. Kanäle, die von Kühlwasser durchflossen werden. Der Drehring kann dann die beim Schweißvorgang entstehende Wärme über seine Kontaktfläche mit dem Führungsring an diesen abführen. Die Kühlung lediglich eines Führungsringssegments reicht häufig aus, da während des Umlaufs des Drehrings jedes seiner Segmente einmal mit dem gekühlten Führungsringsegment in Berührung kommt. Die Kühlung lediglich eines Führungsringssegments hat den Vorteil, daß keine flexiblen Verbindungen (Schläuche) zum Weiterleiten des Kühlmediums zum zweiten Führungsringsegment erforderlich sind. Wenn eine Kühlung des gesamten Führungsrings erwünscht ist, sind in der Regel zwischen den Führungsringsegmenten flexible Schlauchverbindungen erforderlich.

Der Drehring und/oder der Führungsring weisen vorteilhafterweise in ihren aneinanderliegenden Stirnflächen eine umlaufende Ausnehmung aus, in die ein werkzeugfester (also relativ zum Schweißkopf ortsfester) Zufuhrkanal für Schutzgas mündet. Über diesen Zufuhrkanal wird die Ausnehmung mit Schutzgas gespeist. Der Drehring weist wenigstens einen in die Ausnehmung mündenden Auslaßkanal zum Weiterleiten des Schutzgases zur Schweißstelle auf. Auf diese Weise kann dem sich drehenden Schweißwerkzeug Schutzgas zugeführt werden, ohne daß dazu komplizierte und bei der Handhabung des Schweißkopfs störende flexible Schlauchverbindungen erforderlich sind.

Auch die Stromzufuhr zum Schweißwerkzeug kann ohne separate und störende Kabel erfolgen, wenn der Drehring, der Führungsring und die Spanneinrichtungen aus elektrisch leitendem Material bestehen. Es sind dann der Dreh- und Führungsring einerseits und die Spanneinrichtungen andererseits voneinander elektrisch isoliert. Zu diesem Zweck ist zweckmäßigerweise der Werkzeugkörper zwischen dem Drehring und Führungsring einerseits und den Spanneinrichtungen andererseits aus einem elektrisch nicht leitenden Material wie temperaturbeständigem Hartkunststoff oder Keramik gefertigt. Der Führungsring ist mit der Schweißstromquelle verbunden und leitet den Schweißstrom über seine Stirnfläche zum Drehring, dieser wiederum leitet ihn zu dem an ihm angeordneten Schweißwerkzeug. Die Spanneinrichtungen sind mit Masse verbunden, so daß die Werkstücke durch das Einspannen elektrische Masseverbindung erhalten und ein gesonderter Masseanschluß entfallen kann. Bei einem solchen Schweißkopf sind somit keinerlei Kabel- oder Schlauchverbindungen zwischen den Werkzeugsegmenten oder zu einzelnen Teilen wie dem Schweißwerkzeug erforderlich, so daß dieser erfindungsgemäße Schweißkopf besonders einfach zu handhaben ist und eine hohe Betriebssicherheit aufweist.

Die Spanneinrichtungen sind vorteilhafterweise auswechselbar, um eine Anpassung des Schweißkopfs an verschiedene Werkstückdurchmesser zu ermöglichen.

Zweckmäßigerweise weist der Schweißkopf eine Kontrolleinrichtung zur Feststellung der Winkelstellung des Drehrings auf. Auf diese Weise kann sichergestellt werden, daß der Schweißkopf nur dann geöffnet wird, wenn die Teilungsfugen des Drehrings sich mit den Teilungsfugen des Schweißkopfs decken. Die Kontrolleinrichtung kann eine Signalleuchte ansprechen oder den Öffnungsmechanismus blockieren, solange diese Bedingung nicht erfüllt ist.

Der Drehring kann unmittelbar ein innerhalb des Schweißkopfs umlaufendes Schweißwerkzeug tragen. Es ist aber auch möglich, daß der Drehring mit einem axial aus dem Schweißkopf ragenden Ansatzstück verbunden ist, an dem außerhalb des Schweißkopfs ein Schweißelektrodenhalter angeordnet ist, wobei das Ansatzstück einen mit dem Auslaßkanal des Drehrings verbundenen Kanal zum Zuführen von Schutzgas zur Schweißstelle aufweist. Auf diese Weise kann ein in den Schweißkopf gespanntes Rohr auch mit einem im Schweißkopf nicht spannbaren Werkstück bspw. einem Flansch, einer Armatur, einem Rohrkrümmer oder dergleichen verschweißt werden. Das Ansatzstück kann lösbar mit einem Ringsegment verbunden sein. Es ist aber auch denkbar, daß es einstückig mit dem Ringsegment verbunden ist. Das entsprechende Ringsegment wird dann ausgetauscht, wenn wieder mit dem unmittelbar am Drehring angeordneten Schweißwerkzeug gearbeitet werden soll. Somit ermöglicht dieser Schweißkopf wahlweise Innenschweißungen innerhalb des vom Werkzeuggehäuse eingeschlossenen Raumes und Außenschweißungen. Da bei Außenschweißungen das Schutzgas über das Ansatzstück der Schweißstelle zugeführt wird, sind auch in diesem Fall besondere Schlauchverbindungen nicht erforderlich.

Vorteilhafterweise ist der Ort des Schweißelektrodenhalters relativ zum Drehring verstellbar. Dies erlaubt die Anpassung an verschiedene Werkstückdurchmesser. Der Elektrodenhalter ist vorteilhafterweise federnd auf dem Ansatzstück angeordnet und sein Abstand zur Werkstückoberfläche ist durch einen verstellbaren, unter der Federkraft auf der Werkstückoberfläche anliegenden Abstandhalter bestimmt. Diese mechanische Höhenabtastung sichert einen gleichbleibenden Abstand der Schweißelektrode zum Werkstück und sorgt dadurch für gleichmäßige Schweißergebnisse.

Wenn innerhalb des Schweißkopfgehäuses geschweißt werden soll, sind die Spanneinrichtungen zweckmäßigerweise als Spannbacken ausgebildet, die im geschlossenen Zustand des Schweißkopfs zusammen mit dessen Radialwänden eine den Schweißbereich umschließende Kammer bilden. Der Schweißbereich ist auf diese Weise optimal gegen äußere Einwirkungen (Luftzutritt) geschützt und es müssen der Kammer nur verhältnismäßig geringe Mengen Schutzgas zugeführt werden, um die Schutzgasatmosphäre im Schweißbereich aufrechtzuerhalten. Die Aufnahmen für die Spannbacken können Kühleinrichtungen aufweisen. Statt dessen oder zusätzlich kann eine gekühlte Haltevorrichtung vorgesehen sein, auf die der Schweißkopf in Schweißpausen aufgesetzt wird und die durch Flächenkontakt mit den Spannbacken Wärme abführt.

Die Spanneinrichtungen und die den Drehring enthaltenden Werkzeugsegmente können zum voneinander unabhängigen Öffnen und Schließen ausgebildet sein. Es ist dann möglich, nach dem Einspannen des Werkstücks zunächst dessen axiale Lage zu überprüfen und ggf. zu korrigieren und dann erst den Schweißkopf im Schweißbereich zu schließen.

Bei dem erfindungsgemäßen Schweißkopf wird als Schweißwerkzeug üblicherweise eine Wolframelektrode verwendet. Es wird dann nach dem sogenannten WIG-Schweißverfahren (Wolfram-Inertgas-Schweißverfahren) gearbeitet. Als Schutz- bzw. Inertgas wird in der Regel Argon verwendet.

Ein Ausführungsbeispiel der Erfindung wird im folgenden anhand der Zeichnung beschrieben. Darin zeigen:
- Fig. 1: einen Längsschnitt durch den erfindungsgemäßen Schweißkopf,
- Fig. 2: einen Schnitt entlang der Linie A - A in Fig. 1,
- Fig. 3: einen Schnitt entlang der Linie C - C in Fig. 2,
- Fig. 4: eine Seitenansicht des Werkzeugoberteils mit außerhalb des Schweißkopfs umlaufender Schweißelektrode,
- Fig. 5: einen Schnitt in der Ebene D - D in Fig. 4.

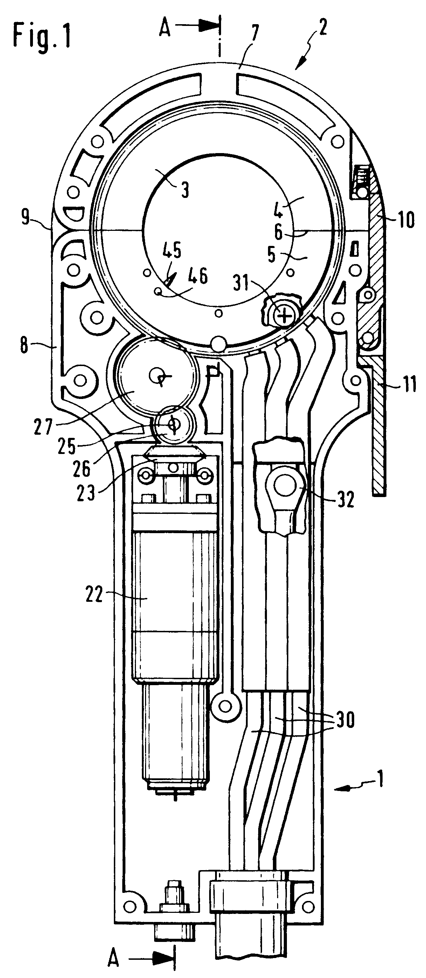

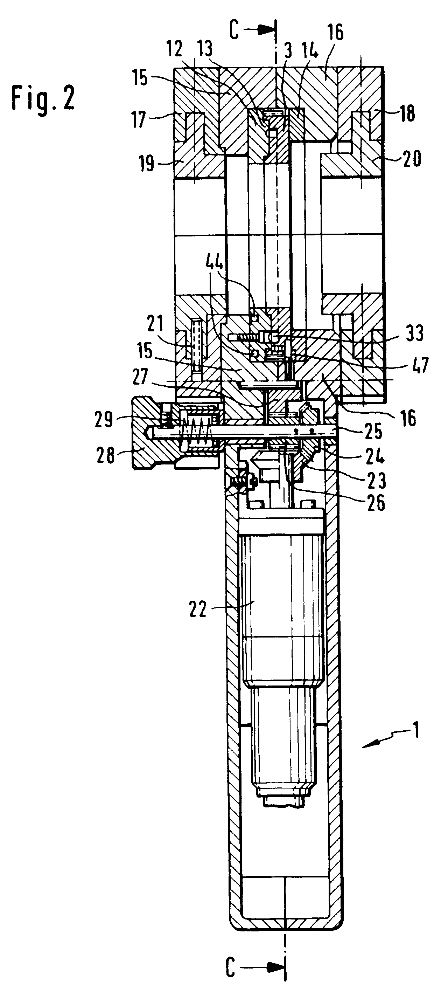

Der Schweißkopf weist einen Schaft 1 und einen oberen Werkzeugkörper 2 auf. In dem Werkzeugkörper 2 läuft ein das in der Zeichnung nicht dargestellte Werkstück umschließender Zahnring 3 um, der aus zwei halbkreisförmigen Segmenten 4 und 5 zusammengesetzt ist, deren Teilungsfuge bei 6 angedeutet ist. Der Werkzeugkörper 2 weist eine obere Hälfte 7 und eine untere Hälfte 8 auf. Die beiden Hälften 7, 8 sind bei 9 schwenkbar miteinander verbunden und werden in ihrer geschlossenen Stellung durch eine Verriegelungseinrichtung 10, die über einen Griff 11 betätigbar ist, lösbar verriegelt. In der in Fig. 1 gezeigten Stellung des Zahnrings 3 decken sich die Teilungsfuge 6 der Ringsegmente 4 und 5 und die Teilungsfuge der Werkzeughälften 7 und 8. Der Zahnring 3 liegt stirnseitig an einem im Werkzeugkörper festen Führungsring 12 an (siehe Fig. 2), der ebenfalls geteilt ist und dessen Teilungsfugen sich mit denjenigen der Werkzeugkörperhälften 7 und 8 decken. Der Führungsring 12 weist an seiner dem Zahnring zugewandten Stirnseite einen Ringvorsprung 13 auf, der in eine entsprechende in Umfangsrichtung verlaufende Nut des Zahnrings 3 eingreift und diesen so gegen ein radiales Verschieben sichert. Mit der vom Führungsring 12 abgewandten Stirnseite liegt der Zahnring 3 an einem federnd gelagerten (in der Zeichnung nicht dargestellt) Andruckring 14 an, der in gleicher Weise wie der Führungsring 12 geteilt ist. Der Andruckring 14 wird durch eine nicht gezeigte Feder gegen den Zahnring 3 gedrückt, wodurch dieser in Anlage am Führungsring 12 gehalten und eindeutig axial positioniert wird. Der Zahnring 3 und der Führungsring 12 sind aus Metall gefertigt, während der Andruckring 14 aus Teflon besteht. Diejenigen Teile 15, 16 des Werkzeugkörpers, die den Zahnring 3, den Führungsring 12 und dem Andruckring 14 halten und umfassen, bestehen aus einem festen, elektrisch nichtleitenden Kunststoff. Axial nach außen schließen sich daran die aus Metall bestehenden Halteeinrichtungen 17, 18 für die ebenfalls aus Metall gefertigten Spannbacken 19, 20 an. Letztere dienen zum Einspannen der mit einer Schweißnaht zu versehenden Werkstücke. Sie sind durch die Teile 15, 16 des Werkzeugkörpers elektrisch von dem Zahnring isoliert. Die Spannbacken 19, 20 sind ebenso wie der Werkzeugkörper in der Fuge 6 geteilt, damit der Schweißkopf geöffnet werden kann. Die Spannbacken 19, 20 sind zur Anpassung an unterschiedliche Werkstückdurchmesser auswechselbar. Sie sind so ausgeführt, daß sie das Werkstück fest und sicher umfassen und halten, so daß sich der Werkzeugkörper während des Schweißvorgangs nicht ungewollt verschieben kann und ein guter elektrischer Kontakt mit dem Werkstück besteht. Zu diesem Zweck kann vorgesehen sein, daß eine Hälfte der Spannbacken 19 und/oder 20 federnd gegen die andere Hälfe bzw. gegen das Werkstück gepreßt wird. Bei 21 ist eine Druckfeder angedeutet, die die beweglich in der Halteeinrichtung 17 angeordnete untere Hälfte der Spannbacke 19 beaufschlagt.

Im dargestellten Ausführungsbeispiel ist vorgesehen, daß die Segmente 4 und 5 des Werkzeugkörpers derart mit den Halteeinrichtungen verbunden sind, daß sie mittels der Verriegelungseinrichtung 10 gemeinsam geschlossen bzw. geöffnet werden können. Als Modifikation dieser Ausführungsform kann vorgesehen sein, daß sich die Segmente 15, 16 des Werkzeugkörpers und die Halteeinrichtungen 17, 18 mit den Spannbacken 19, 20 unabhängig voneinander öffnen und schließen lassen. Es ist dann möglich, den Werkzeugkörper im Bereich seiner Teile 15, 16 zu öffnen, um die korrekte axiale Positionierung des Werkstücks zu überprüfen, welches durch die Spannbacken 19 bzw. 20 gehalten ist.

In dem Schaft 1 befindet sich ein Getriebemotor 22, der auf seiner Antriebsachse ein Kegelrad 23 aufweist. Dieses Kegelrad 23 kämmt mit einem zweiten Kegelrad 24, daß drehfest mit einer Achse 25 verbunden ist. Ebenfalls drehfest mit der Achse 25 ist ein Zahnrad 26 verbunden, daß mit einem Antriebsritzel 27 kämmt. Dieses Antriebsritzel 27 wiederum kämmt mit den am Außenumfang des Zahnrings 3 vorgesehenen Zähnen und treibt ihn auf diese Weise an. Die Achse 25 kann durch Druck auf den Knopf 28 gegen die Kraft der Feder 29 in die in Figur 2 rechte Richtung verschoben werden, so daß das Kegelrad 24 von dem Kegelrad 23 entfernt wird. Der Getriebemotor 22 ist dann von dem Zahnring 3 abgekuppelt und der Zahnring 3 läßt sich per Hand durch Drehen am Knopf 28 in jede gewünschte Stellung verdrehen.

Durch den Schaft 1 sind Zuleitungen 30 für Schutzgas, Kühlmedium und Strom (Schweißstrom, sowie Strom für den Motor 22 und etwaige Überwachungseinrichtungen) geführt. Der Schweißstrom wird durch eine Kontakteinrichtung 31 dem Führungsring 15 und somit auch dem damit stirnseitig in Kontakt befindlichen Zahnring 3 zugeführt. Mit dem Zahnring ist eine Schweißelektrode verbunden, die unten näher erläutert wird. Der Masseanschluß ist bei 32 angedeutet. Es besteht Masseverbindung zu den Spannbacken 19, 20, so daß ein separater Masseanschluß an den zu schweißenden Werkstücken nicht mehr vorgenommen werden muß.

Der Zahnring und die ihm umgebenden Teile müssen gekühlt werden. Zu diesem Zweck wird Kühlwasser durch Kühlwasserkanäle 44 der in der unteren Werkzeughälfte 8 befindlichen Hälfte des Führungsrings 12 geleitet. Obwohl die Kühlwasserkanäle 44 nur in der unteren Hälfte vorgesehen sind, wird eine ausreichende Kühlung erreicht, denn während des Umlaufs des Zahnrings 3 kommt jedes seiner Segmente 4, 5 einmal mit dem gekühlten Führungsringsegment in Berührung.

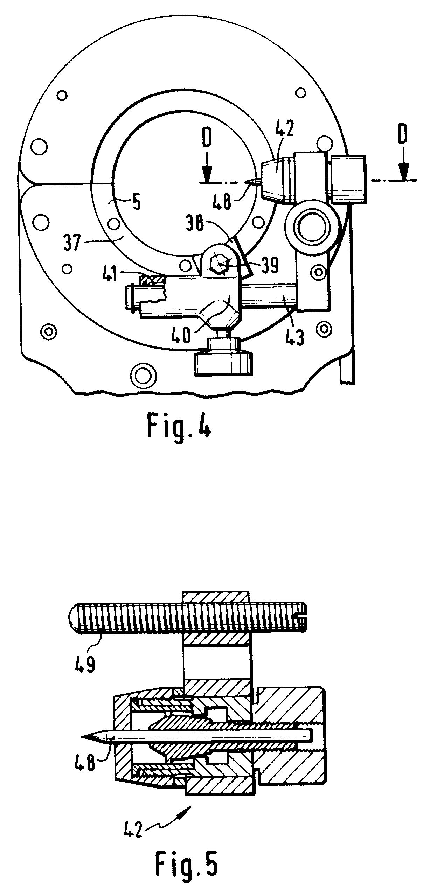

In die am Führungsring 12 anliegende Stirnfläche des Zahnrings 3 ist eine umlaufende Nut 33 eingetieft, in die über einen im Führungsring 12 befindlichen und somit werkzeugfesten Zufuhrkanal Schutzgas gespeist wird (der Zufuhrkanal ist in der Zeichnung nicht dargestellt). Der Zahnring 3 weist einen mit dieser Nut 33 verbundenen Auslaßkanal zum Weiterleiten des Schutzgases zur Schweißelektrode auf. Das Schutzgas kann durch diesen Auslaßkanal unmittelbar in den Schweißraum eintreten, wenn mit einer innerhalb des Schweißkopfs umlaufenden Schweißelektrode gearbeitet wird. Die Spannbacken 19, 20 und die Spanneinrichtungen 17, 18 bilden zusammen mit dem Werkzeugkörper eine die Schweißstelle umschließende Kammer, die das der Schweißstelle zugeführte Schutzgas zurückhält, so daß der Schutzgasverbrauch gering ist. In Fig. 1 ist eine solche innerhalb des Schweißkopfs angeordnete Schweißelektrode 45 zu erkennen. Sie hat eine nadelartige Form und ist in eine Radialbohrung der Innenumfangsfläche des Zahnringsegments 5 gesteckt und wird darin durch eine von der Stirnseite des Zahnrings her eingedrehte Madenschraube 46 gehalten. Wenn mit einer außerhalb des Schweißkopfes umlaufenden Schweißelektrode gearbeitet wird (siehe unten Beschreibung zu Fig. 5), wird das Schutzgas durch ein am Zahnring 3 angebrachtes Ansatzstück weiter zur Schweißstelle geführt.

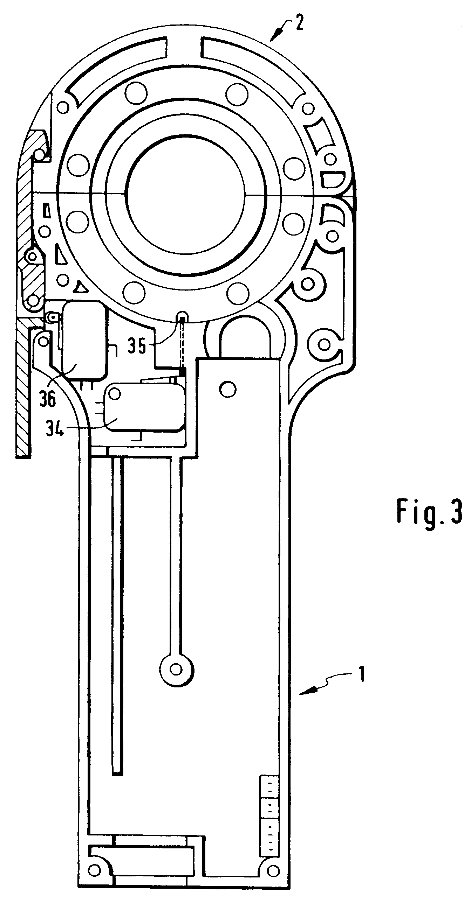

Der Schweißkopf soll nur dann geöffnet werden, wenn die Teilungsfuge 6 des Zahnrings 3 sich mit der Teilungsfuge der Werkzeughälften deckt. Als Kontrolleinrichtung ist ein Schalter 34 vorgesehen (siehe Figur 3), der von einem Stift 35 betätigt wird. Wie in Figur 2 zu erkennen ist, weist der Zahnring 3 nicht über seine gesamte axiale Erstreckung eine Außenverzahnung auf. An dem nicht mit einer Außenverzahnung versehenen Umfangsabschnitt ist eine Vertiefung 47 vorgesehen, in die der Stift 35 dann unter Federdruck eingreift, wenn die Teilungsfugen von Zahnring und Werkzeug deckungsgleich sind. Der Schalter 34 kann dann ein Signal auslösen, welches bewirkt oder anzeigt, daß das Werkzeug jetzt geöffnet werden kann. Die korrekte Verriegelung des Schweißkopfs in geschlossener Stellung wird durch einen zweiten Schalter 36 überwacht, der beim Lösen der Verriegelungseinrichtung 10, 11 auslöst.

Figur 4 zeigt eine Ansicht des oberen Schweißkopfteils von der in Figur 2 rechten Seite. Die Spannbacken 20 sind entfernt und an die Stirnfläche der unteren Zahnringhälfte 5 ist ein Ringsegment 37 angesetzt, das einstückig mit einem axial aus dem Schweißkopf ragenden Ansatzstück 38 verbunden ist. An dem Ansatzstück 38 ist bei 39 schwenkbar ein Schweißelektrodenhalter 40 befestigt, der von einer bei 41 angedeuteten Torsionsfeder beaufschlagt ist, die ihn im Gegenuhrzeigersinn um die Achse 39 zu drehen sucht. Der Schweißelektrodenhalter 40 trägt über einen Bolzen 43, der als verstellbarer Abstandshalter dient, die Schweißelektrodenfassung 42, in der die Schweißelektrode 48 gehalten ist. Die Torsionsfeder 41 und die schwenkbare Lagerung des Schweißelektrodenhalters 40 bewirken, daß die Schweißelektrode 48 in Richtung zur Oberfläche des im Schweißkopf eingespannten Werkstücks hin gedrückt wird. Der Abstand der Schweißelektrode 48 von der Werkstückoberfläche wird durch einen in Fig. 5 dargestellten verstellbaren Abstandhalter 49 bestimmt, der sich unter der Kraft der Feder 41 an der Werkstückoberfläche anlegt und somit für eine mechanische Höhenabtastung und stets konstanten Abstand der Elektrode 48 von der Werkstückoberfläche sorgt. Das Ringsegment 37, das Ansatzstück 38, der Schweißelektrodenhalter 40, der Bolzen 43 und die Schweißelektrodenfassung 42 weisen jeweils Kanäle zum Weiterleiten des Schutzgases zur Schweißstelle auf (in der Zeichnung nicht dargestellt).

## Patentansprüche

1. Schweißkopf zum Anbringen von Schweißnähten am Umfang im wesentlichen zylindrischer Werkstücke, mit wenigstens zwei um die Werkstücke schließbaren Werkzeugkörpersegmenten (7, 8), die Spanneinrichtungen (19, 20) zum Spannen und Positionieren der Werkstücke aufweisen, und mit einem relativ zum Schweißkopf drehend antreibbaren und dabei die Werkstücke umlaufenden Schweißwerkzeug (45), dadurch gekennzeichnet, daß das Schweißwerkzeug (45) an einem den Werkstückumfang vollständig umschließenden Drehring (3) angeordnet ist, der aus wenigstens zwei Ringsegmenten (4, 5) zusammengesetzt ist.

2. Schweißkopf nach Anspruch 1, dadurch gekennzeichnet, daß der von jedem Ringsegment (4, 5) eingenommene Umfangswinkel dem von einem Werkzeugkörpersegment (7, 8) eingenommenen Umfangswinkel entspricht.

3. Schweißkopf nach Anspruch 1 oder 2, dadurch gekennzeichnet, daß der Drehring als Zahnring (3) mit einem Außenumfang angeordneten Zahnkranz ausgebildet ist.

4. Schweißkopf nach einem der Ansprüche 1 bis 3, dadurch gekennzeichnet, daß der Drehring (3) stirnseitig an einem relativ zum Schweißkopf festen, geteilten Führungsring (12) anliegt, dessen Teilung der Teilung der um die Werkstücke schließbaren Werkzeugkörpersegmente (7, 8) entspricht.

5. Schweißkopf nach Anspruch 4, dadurch gekennzeichnet, daß an der vom Führungsring (12) abgewandten Stirnfläche des Drehrings (3) ein axial federnder geteilter Andruckring (14) anliegt, dessen Teilung der Teilung der um die Werkstücke schließbaren Werkzeugkörpersegmente (7, 8) entspricht.

6. Schweißkopf nach Anspruch 4 oder 5, dadurch gekennzeichnet, daß wenigstens ein Segment des Führungsrings (12) Kühleinrichtungen (44) aufweist.

7. Schweißkopf nach einem der Ansprüche 4 bis 6, dadurch gekennzeichnet, daß der Drehring (3) und/oder Führungsring (12) in ihren aneinanderliegenden Stirnflächen eine umlaufende Ausnehmung (33) aufweisen, in die ein werkzeugfester Zufuhrkanal für Schutzgas mündet, wobei der Drehring (3) wenigstens einen mit der Ausnehmung (33) verbundenen Auslaßkanal zum Weiterleiten des Schutzgases zur Schweißstelle aufweist.

8. Schweißkopf nach einem der Ansprüche 4 bis 7, dadurch gekennzeichnet, daß der Drehring (3), der Führungsring (12) und die Spanneinrichtungen (19, 20) aus elektrisch leitendem Material bestehen und daß der Dreh- und Führungsring (3, 12) einerseits und die Spanneinrichtungen (19, 20) andererseits voneinander elektrisch isoliert sind, wobei der Führungsring (12) mit der Schweißstromquelle und die Spanneinrichtungen (19, 20) mit Masse verbunden sind.

9. Schweißkopf nach einem der Ansprüche 1 bis 8, dadurch gekennzeichnet, daß die Spanneinrichtungen (19, 20) auswechselbar sind.

10. Schweißkopf nach einem der Ansprüche 1 bis 9, dadurch gekennzeichnet, daß eine Kontrolleinrichtung (34, 35) zur Feststellung der Winkelstellung des Drehrings (3) vorgesehen ist.

11. Schweißkopf nach einem der Ansprüche 7 bis 10, dadurch gekennzeichnet, daß der Drehring (3) mit einem axial aus dem Schweißkopf ragenden Ansatzstück (38) verbunden ist, an dem außerhalb des Schweißkopfs ein Schweißelektrodenhalter (40, 42) angeordnet ist, wobei das Ansatzstück (38) einen mit dem Auslaßkanal des Drehrings (3) verbundenen Kanal zum Zuführen von Schutzgas zur Schweißstelle aufweist.

12. Schweißkopf nach Anspruch 11, dadurch gekennzeichnet, daß der Ort des Schweißelektrodenhalters (40, 42) relativ zum Drehring (3) verstellbar ist.

13. Schweißkopf nach Anspruch 11 oder 12, dadurch gekennzeichnet, daß der Elektrodenhalter (40, 42) federnd an dem Ansatzstück (38) angeordnet ist, und daß sein Abstand zur Werkstückoberfläche durch einen verstellbaren, unter der Federkraft auf der Werkstückoberfläche anliegenden Abstandhalter (43) bestimmt ist.

14. Schweißkopf nach einem der Ansprüche 1 bis 10, dadurch gekennzeichnet, daß die Spanneinrichtungen als Spannbacken (19, 20) ausgebildet sind, die im geschlossenen Zustand des Schweißkopfs zusammen mit dem Werkzeugkörper eine den Schweißbereich umschließende Kammer bilden.

15. Schweißkopf nach einem der Ansprüche 1 bis 14, dadurch gekennzeichnet, daß die Spanneinrichtungen (19, 20) und die Werkzeugsegmente (7, 8) zum voneinander unabhängigen Öffnen und Schließen ausgebildet sind.

## Claims

1. A welding head for applying welds to the circumference of substantially cylindrical workpieces, with at least two tool body segments (7,8) which can be closed around the workpieces and which have clamping means (19,20) for clamping and positioning the workpieces, and with a welding tool (45) which can be driven to rotate relative to the welding head and which thus rotates around the workpiece, characterised in that the welding tool (45) is mounted on a rotary ring (3) which completely surrounds the workpiece circumference and which is composed of at least two annular segments (4,5).

2. A welding head according to Claim 1, characterised in that the inscribed angle at the circumference occupied by each annular segment (4,5) corresponds to the inscribed angle at the circumference occupied by one tool body segment (7,8).

3. A welding head according to Claim 1 or 2, characterised in that the rotary ring is in the form of a toothed ring (3) with a tooth rim arranged on the outer circumference.

4. A welding head according to any one of Claims 1 to 3, characterised in that the rotary ring (3) adjoins at its end face a split guide ring (12) which is fixed relative to the welding head and the pitch of which corresponds to the pitch of the tool body segments (7,8) which can be closed around the workpieces.

5. A welding head according to Claim 4, characterised in that an axially resilient split pressure ring (14) is applied against the end face of the rotary ring (3) remote from the guide ring (12), the spacing of which pressure ring corresponds to the spacing of the tool body segments (7,8) which can be closed around the workpieces.

6. A welding head according to Claim 4 or 5, characterised in that at least one segment of the guide ring (12) has cooling means (44).

7. A welding head according to any one of Claims 4 to 6, characterised in that the rotary ring (3) and/or the guide ring (12) have in their adjoining end faces an annular recess (33) into which a feed duct for protective gas opens which is fixed to the tool, wherein the rotary ring (3) has at least one outlet duct connected with the recess (33) and serving to convey the protective gas to the welding point.

8. A welding head according to any one of Claims 4 to 7, characterised in that the rotary ring (3), the guide ring (12) and the clamping means (19,20) consist of electrically conductive material, and in that the rotary ring and the guide ring (3,12), on the one hand, and the clamping means (19,20), on the other hand, are electrically insulated from one another, wherein the guide ring (12) is connected to the welding current supply and the clamping means (19,20) is connected to earth.

9. A welding head according to any one of Claims 1 to 8, characterised in that the clamping means (19,20) are interchangeable.

10. A welding head according to any one of Claims 1 to 9, characterised in that a control means (34,35) for determining the angular position of the rotary ring (3) is provided.

11. A welding head according to any one of Claims 7 to 10, characterised in that the rotary ring (3) is connected with a shoulder member (38) which projects axially from the welding head and on which a welding electrode holder (40,42) is mounted outside the welding head, wherein the shoulder member (38) has a duct connected with the outlet duct of the rotary ring (3) for supplying protective gas to the welding point.

12. A welding head according to Claim 11, characterised in that the location of the welding electrode holder (40,42) is adjustable relative to the rotary ring (3).

13. A welding head according to Claim 11 or 12, characterised in that the electrode holder (40,42) is mounted resiliently on the shoulder member (38), and in that its spacing from the workpiece surface is determined by an adjustable spacer (43) applied to the workpiece surface under the spring force.

14. A welding head according to any one of Claims 1 to 10, characterised in that the clamping means are in the form of clamping jaws (19,20) which, in the closed condition of the welding head, form together with the tool body a chamber enclosing the welding zone.

15. A welding head according to any one of Claims 1 to 14, characterised in that the clamping means (19,20) and the tool body segments (7,8) are designed to be opened and closed independently of one another.

## Revendications

1. Tête de soudage pour réaliser des cordons de soudure à la périphérie de pièces d'usinage essentiellement cylindriques, comprenant :
- au moins deux segments (7, 8) d'un corps d'outil pouvant être fermés autour des pièces d'usinage, lesdits segments comprenant des dispositifs de serrage (19, 20) pour serrer et positionner les pièces d'usinage, et
- un outil de soudage (45) pouvant être entraîné en rotation par rapport à la tête de soudage et faisant ainsi tourner les pièces d'usinage,
caractérisée en ce que l'outil de soudage (45) est disposé sur un anneau pivotant (3) entourant complètement la périphérie de la pièce d'usinage, ledit anneau étant composé au moins de deux segments annulaires (4, 5).

2. Tête de soudage selon la revendication 1, caractérisée en ce que l'angle périphérique formé par chaque segment annulaire (4, 5) correspond à l'angle périphérique formé par un segment (7, 8) du corps d'outil.

3. Tête de soudage selon la revendication 1 ou 2, caractérisée en ce que l'anneau pivotant est configuré comme un anneau denté (3) pourvu d'une couronne dentée disposée à la périphérie extérieure.

4. Tête de soudage selon l'une quelconque des revendications 1 à 3, caractérisée en ce que l'anneau pivotant (3) est en appui, par sa face frontale, sur un anneau de guidage (12) divisé et fixe par rapport à la tête de soudage, la division de l'anneau de guidage correspondant à la division des segments (7, 8) du corps d'outil pouvant être fermés autour des pièces d'usinage.

5. Tête de soudage selon la revendication 4, caractérisée en ce qu'un anneau de pression (14) divisé axialement, monté sur ressort, est en appui contre la surface frontale, placée à l'opposé de l'anneau de guidage (12), de l'anneau pivotant (3), la division dudit anneau de pression correspondant à la division des segments (7, 8) du corps d'outil pouvant être fermés autour des pièces d'usinage.

6. Tête de soudage selon la revendication 4 ou 5, caractérisée en ce que au moins un segment de l'anneau de guidage (12) comprend des dispositifs de refroidissement (44).

7. Tête de soudage selon l'une quelconque des revendications 4 à 6, caractérisée en ce que l'anneau pivotant (3) et/ou l'anneau de guidage (12) comprennent, dans leurs faces frontales adjacentes l'une à l'autre, une gorge circulaire (33) dans laquelle arrive, fixe par rapport à l'outil, un canal d'alimentation en gaz protecteur, où l'anneau pivotant (3) comprend au moins un canal d'évacuation relié à la gorge (33) pour continuer à acheminer le gaz protecteur jusqu'au point de soudure.

8. Tête de soudage selon l'une quelconque des revendications 4 à 7, caractérisée en ce que l'anneau pivotant (3), l'anneau de guidage (12) et les dispositifs de serrage (19, 20) sont réalisés dans un matériau électriquement conducteur, et en ce que l'anneau pivotant (3) et l'anneau de guidage (12) d'une part, et les dispositifs de serrage (19, 20) d'autre part, sont isolés électriquement l'un de l'autre, ou l'anneau de guidage (12) est connecté à la source du courant de soudage, les dispositifs de serrage (19, 20) étant connectés à la masse.

9. Tête de soudage selon l'une quelconque des revendications 1 à 8, caractérisée en ce que les dispositifs de serrage (19, 20) sont démontables.

10. Tête de soudage selon l'une quelconque des revendications 1 à 9, caractérisée en ce qu'un dispositif de contrôle (34, 35) est prévu pour constater la position angulaire de l'anneau pivotant (3).

11. Tête de soudage selon l'une quelconque des revendications 7 à 10, caractérisée en ce que l'anneau pivotant (3) est relié à un embout (38) faisant saillie axialement par rapport à la tête de soudage, un porte-électrode de soudage (40, 42) étant disposé sur ledit embout à l'extérieur de la tête de soudage, où l'embout (38) comprend un canal relié au canal d'évacuation de l'anneau pivotant (3) pour acheminer le gaz protecteur jusqu'au point de soudure.

12. Tête de soudage selon la revendication 11, caractérisée en ce que l'endroit où se trouve le porte-électrode de soudage (40, 42) peut être déplacé par rapport à l'anneau pivotant (3).

13. Tête de soudage selon la revendication 11 ou 12, caractérisée en ce que le porte-électrode de soudage (40, 42), doté d'un ressort, est monté sur l'embout (38), et en ce que l'espace le séparant de la surface de la pièce d'usinage est déterminé par une entretoise (43) réglable venant en appui sur la surface de la pièce d'usinage sous l'effet de la force du ressort.

14. Tête d'usinage selon l'une quelconque des revendications 1 à 10, caractérisée en ce que les dispositifs de serrage sont configurés comme des mâchoires de serrage (19, 20) qui constituent, associées au corps d'outil, une chambre entourant la zone de soudage lorsque la tête de soudage est fermée.

15. Tête de soudage selon l'une quelconque des revendications 1 à 14, caractérisée en ce que les dispositifs de serrage (19, 20) et les segments d'outil (7, 8) sont configurés pour s'ouvrir et se fermer indépendamment les uns des autres.
